# EUROPEAN PATENT SPECIFICATION

(11) **EP 1 932 892 B1**
(45) Date of publication and mention of the grant of the patent: **28.10.2009**
(21) Application number: 06291914.7
(22) Date of filing: 13.12.2006
(51) Int. Cl.: C09J 7/00

(54) **Wire harnessing tape**
Drahtbinderband
Bande à faisceau de bobine

(43) Date of publication of application: 18.06.2008
(73) Proprietor: Scapa France, 26000 Valence (FR)
(72) Inventor: Mayan, Robert, 26000 Valence (FR); Riva, Arnaud, 74150 Rumilly (FR); Elliot, Jayne, Dukinfield, Cheshire SK16 5BF (GB)
(74) Representative: Renken, Joachim

(56) References cited:
- WO-A-00/44845
- WO-A-00/61201
- WO-A-2004/058117
- WO-A-2006/039188
- WO-A-2006/107763
- WO-A2-2006/039191
- DE-A1- 4 442 092
- DE-U1- 20 006 192
- US-A1- 2002 192 742
- US-A1- 2003 135 178
- US-A1- 2006 069 367

## Description

The present invention relates to an adhesive tape containing a wet-laid nonwoven as a backing material. The tape is particularly useful as a wire harnessing tape for use in the automotive industry.

### Background

Pressure sensitive adhesive (PSA) tapes are widely used in automotive industry to manufacture wire harness assemblies. Different adhesives are applied to specialty backings and carriers, such as films, foams and textiles, to provide products that meet a variety of requirements. Although PSA tapes account for just a fraction of the total component cost, they are critical to the manufacturing of cost-effective automotive wire harness assembly. In 2003, more than 150 million square meters of wire harness tape was used by the automotive industry around the world.

The average vehicle's wire harness system consists of approximately 1000 meters of wire and runs from the engine compartment through the passenger area to the trunk. These distinct environments require tapes with diverse performance capabilities. For example, tapes used in the engine compartment must resist fluids and high temperatures. Harnesses in the interior instrument panel, door panel and overhead areas require tapes that attenuate noise, vibration and harshness, to minimize squeaks and rattles caused by wire harness movement at high speeds.

Temperature is a major concern in automotive applications. For wire harness assemblies, automotive temperatures are typically segmented into four ranges. T1 applications do not exceed 85°C. T2 applications range from 86 to 105°C. T3 includes temperatures ranging from 106 to 125°C, and T4 applications involve temperatures of 126 to 150°C.

Generally, tapes that use rubber and modified rubber adhesives are best for T1 and T2 applications. Acrylic adhesives perform well in the T3/T4 temperature range. Silicones are ideal for temperatures of T4 and higher.

Several types of backings are used on automotive wire harness tapes. Backing materials are selected based on the requirements of the application. Common backings include PVC, cotton cloth, coated cloth, felt, polyester cloth and glass cloth. Some backings and adhesive systems are also flame-retardant.

Adhesive-coated PVC is widely used for termination and clip retention, where squeak and rattle issues are not a concern.

Cloth tapes provide the most economical squeak and rattle protection and are used for clip retention and harness wrapping inside doors, instrument panels and overhead areas. Coated cloth tapes are used for splice protection of wire terminations and breakouts, due to their high moisture resistance. The latest cloth tapes provide significantly improved abrasion resistance compared with PVC tapes. Flame-retardant cloth tapes offer performance benefits in engine compartment applications.

According to a concise survey carried out by R.C. Lilly in 2003 (Web Exclusive: Pressure Sensitive Tapes in Wire Harness Assembly, Ronald C. Lilly, June 1, 2003, www.assemblymag.com/CDA/Articles/Web_Exclusive/e9a1a455ed5c9 010VgnVCM100000f932a8c0) : "Adhesive tapes made of felt and non-woven materials provide the greatest noise protection, but are also the most expensive. They are used sparingly in applications that require extreme quiet, such as instrument panels and overhead harnesses in luxury vehicles."

The PSA tapes used in automotive harness assemblies are selected based on the application, the location of the assembly within the vehicle, and performance requirements. Tape selection is done by the harness manufacturer, conforming to OEM (original equipment manufacturer) specifications to ensure reliable vehicle operation and vehicle safety throughout its lifetime.

These tapes have to meet specific requirements to perform well during application and a life cycle of a car. Among the functions these tapes have to fulfill the most important ones are containment of cables and splicing. Three main ways of wrapping cables to build a wire harness are known: (i) spiral, better described as helicoidal, (ii) flag, and (iii) clip wrapping. Depending on the required level of sound dampening, abrasion resistance and temperature shielding, one of these wrapping techniques will be used. During the production of wire harnesses, tapes are mainly applied manually and therefore must have defined and consistent unwinding characteristics, good pliability and flexibility and must be tearable by hand. Some operators tear in crosswise direction, others tend to break the tape by stretching longitudinally. When stretched, tapes commonly exhibit a behavior described as curling, where the stress leads to deformation in U- or S-shape. Curling increases the risk of flagging and thus has to be minimized.

During the useful life of a car, pressure sensitive adhesive tapes must maintain excellent adhesion to cables over many years. In addition to strong adhesion to a wide range of cables, appropriate mechanical properties are required. Excellent aging resistance, resistance to automotive fluids, sound dampening and an ability to withstand abrasion are key properties. If tapes are employed in the passenger compartment, low odor and fogging properties are increasingly important. Ultimately, a harnessing tape product has to meet cost expectations of users.

Adhesive tapes for automotive wire harnessing applications need to meet a wide range of performance criteria during application and during the life cycle of a vehicle. The following Table 1 lists the most important customer needs and translates them into physical and chemical parameters.

It is apparent that the composition of the backing material critically influences every aspect of the final product's performance.

**Table 1**

| ▼Needs / Metrics► | Tensile & elongation CD | Tensile & elongation MD | Backing thickness | Defined unwindding | Coating weight | Choice of adhesive | Backing composition | Abrasion test | Backing weight | Sound dampening | Burn test |
|---|---|---|---|---|---|---|---|---|---|---|---|
| Hand tearable | **•** | **•** | **•** | | | | **•** | | **•** | | |
| Curling | **•** | **•** | **•** | | | | **•** | | **•** | | |
| Flexibility and pliability | **•** | **•** | **•** | | | | **•** | | **•** | | |
| Abrasion resistance | | | | | | | **•** | **•** | | | |
| Good sound dampening | | | | | | | **•** | | | **•** | |
| Consistent unwind | | | | **•** | | **•** | **•** | | **•** | | |
| Thermal stability T3 | | | | | | **•** | **•** | | | | |
| Black color | | | | | | | **•** | | | | |
| Adhesion | | | | | **•** | **•** | | | | | |
| Aging resistance | | | | | | **•** | **•** | | | | |
| No flagging | | | | **•** | **•** | **•** | **•** | | | | |
| Cost constraint | **•** | **•** | **•** | **•** | **•** | **•** | **•** | | **•** | | |
| No fogging | | | | | **•** | **•** | **•** | | | | |
| Range of lengths & widths | | | | **•** | | | | | | | |
| Good cohesion | | | | | | | **•** | **•** | | | |
| Burn behavior | | | **•** | | **•** | **•** | **•** | | **•** | | **•** |
| No banned substances | | | | | | **•** | **•** | | | | **•** |
| Adhesion backside | | | | | **•** | **•** | **•** | | | | |

Tapes based on woven materials, stitchbonded fabrics like Maliwat (EP 0 716 137) or needle punched nonwovens like Malivlies (EP 0 716 136), have been known on the market for several years. Woven or knitted fabrics offer excellent suitability for harnessing tapes, but are less cost-efficient than nonwovens due to a more complex and slower manufacturing process. Today, their use is becoming more and more uneconomical.

The use of wet-laid technology to produce tape materials for niche applications has been known in the industry for a long time. This type of nonwoven has been used for years in the area of cable wrapping tapes, i.e. non-adhesive strips of considerable length. As early as 1964, Copeland described in US 3 121 021 the advantages of chemically bonded nonwovens for medical tape applications. According to this patent document, suitable carrier materials can also be made by wet-laid procedures. The resulting product, Micropore^{®} was commercialized by 3M for more than 40 years.

The manufacture of wet-laid nonwoven was described in detail by B.P. Thomas in 1993 (Thomas, B.P., A Review of Wet-Laid Nonwovens: Manufacturing and Markets, INDA-TECH 93, 247-264 (1993)). According to this comprehensive review, wet-laid nonwovens are produced from a process which originates from paper making.

Fibers for use in wet-laids fall into various groups. The most basic distinction is between natural and man-made fibers. Natural cellulose fibers are found in wood together with other materials such lignin and hemicellulose. Employed after separation from these other materials and purification, they are often named wood pulp fibers.

Cellulose is the most abundant naturally occurring organic substance, being found as the principal component of cell walls in higher plants where it provides the main structural feature. Cotton is almost pure cellulose (98%) ; flax contains 80% and wood 40-50% cellulose (with the remaining 50% made up from other complex polysaccharides). The special properties of cellulose result from the association of the long molecular chains to form fibers called microfibrils. The microfibrils associate to form larger fibers, which can be separated from other plant materials during the pulping process.

Man-made materials include cellulosics and synthetic fibers. Cellulosics are derived from cellulose by chemical modification. Examples include viscose rayon, cellulose acetate and other modified cellulose fibers. Although these are defined as man-made, they are not pure synthetics since the basic component, cellulose, is naturally fibrous.

Synthetics are produced by full polymerization from monomeric building blocks and include polyester (e.g., Diolen^{®}, Trevira^{®}), polyamide (e.g., nylon), acrylics (e.g., Orlon^{®}) and polyurethane (e.g., Lycra^{®}, Elastan^{®}).

A number of applications using synthetic and natural fibers in non-woven materials have been described. For example, WO 2006/107763 describes the possibility of applying an adhesive to a non-woven backing in order to prepare an adhesive tape. Further use of synthetic and natural fibers for producing non-woven tape based materials has been described in WO 00/44845 and DE 44 42 092.

A number of absorbent articles intended for use as disposable sanitary products comprising non-woven natural and synthetic fibers have been described in US 2006/0069367, US 2003/0135178, WO 2006/039191, WO 2006/039188 and WO 00/61201.

Tufted fibrous non-woven webs of natural and synthetic fibers have been described in WO 2004/058117 as useful for preparing tacky adhesive based cloth. DE 200 06 192 describes the use of stiff form materials comprising fleece layers for use in the interior of vehicles.

The use of non-woven synthetic and natural fibers has even been described for micro culture devices (US 2002/0192742).

US 5 631 073 describes in great detail the benefits of employing nonwovens made of man-made fibers and chemical binders for medical applications. These are used for affixation of articles such as dressings and tubing and as backings for first-aid and island-type dressings. Particularly preferred constructions are: a nonwoven consisting of 80% polyester staple fibers and 20% of polyester binder fibers pattern-embossed and afterwards saturated with water-based acrylic copolymer binder. In a second preferred embodiment, this nonwoven is hydroentangled prior to being pattern-embossed.

Products for medical applications need to be finger or hand tearable. Other essential physical characteristics of the nonwoven include dry and wet strength, conformability, tearability in web direction and a uniformity of strength both in web and cross web direction.

The above-outlined requirements for an automotive tape demonstrate that the performance needed is fundamentally different from those of a medical tape.

### Summary

An object of the present invention is to provide an adhesive tape which demonstrates excellent performance in the field of wire harnessing and which can be produced in a cost-efficient way. This object is achieved by providing an adhesive tape comprising, a wet-laid nonwoven backing material comprising synthetic fibers, cellulose fibers and a binder, and an adhesive. Moreover, a process for manufacturing the adhesive tape is provided.

### Detailed Description

### The nonwoven backing material

Surprisingly, it was found that a nonwoven comprising cellulose fibers, especially wood pulp fibers, synthetic fibers, especially polyester fibers, and a binder provides a backing material for adhesive tapes with excellent properties for automotive tape applications, in particular for automotive wire harness applications.

The term "cellulose fibers", as used herein, refers for example to cellulose fibers found in plants, i.e. natural cellulose fiber. These fibers do not undergo any chemical modifications before used in nonwoven and other industrial manufacturing processes. Thus, cellulose fibers, as used in the present invention, are distinguished from man-made cellulosics such as viscose (rayon), cellulose acetate and other modified cellulose fibers which are derivable from (natural) cellulose by chemical modification.

The term "wood pulp fibers" refers to cellulose fibers found in wood together with other materials such as lignin and hemicellulose which are removed prior to use.

The main parameters for optimizing the nonwoven used as a backing material in the adhesive tape of the present invention are the type, the quantities and the proportion of fiber and binder used. In a preferred embodiment of the present invention, polyester fibers are used as synthetic fibers in the nonwoven backing material. These polyester fibers are preferably polyethylene terephthalate (PET) or poly lactic acid (PLA) which may be produced by melt spinning.

With regard to the optimum balance of plyability and abrasion resistance, the ratio of synthetic to natural fibers in the adhesive tape of the present invention is preferably 4:1 to 1:4 and more preferably 3:1 to 1:3, whereas the ratio of fibers to the binder is preferably 80:20 to 20:80 and more preferably 70:30 to 30:70. Higher amounts of the binder confer more abrasion resistance to the adhesive tapes.

From the viewpoint of optimizing the tearability and tensile strength, the fiber length of the synthetic and cellulose fibers is preferably in the range of 1 to 20 mm, more preferably in the range of 2 to 15 mm.

The weights (or fineness) of both the synthetic and the cellulose fibers are preferably in the range of 0.7 to 5.5 dtex, more preferably in the range of 1 to 4 dtex.

As a chemical binder, one or more binding agents selected from acrylic homopolymers or copolymers can be used. Suitable binders can be acquired from well known sources like BASF (Acronal^{®} range) ; Rohm & Haas (Rhoplex^{®} and Primal^{®} range); Celanese (Nacrylic^{®} products) and Icap-Sira (Acrilem^{®} range). Cohesion of the wet-laid nonwoven can be further improved by use of self-crosslinking binders or by addition of external crosslinkers.

Preferably, the binder is a mixture of an acrylic polymer and a styrene-acrylic copolymer. More preferably, the weight ratio of the acrylic polymer to the styrene-acrylic copolymer is 4:1 to 1:4. Suitable styrene-acrylic binding agents include Acronal^{®} 5530, Acronal^{®} NX 5818, Acronal^{®} 296 D or Acrilem^{®} ST41. As acrylic binding agents, acrylate or acrylate/acrylonitrile copolymers such as Acrilem^{®} ES8, Acrilem^{®} 6090, Acronal^{®} 50 D, Acronal^{®} LA 471 S, Rhoplex^{®} GL-618 or Rhoplex^{®} HA-8 can be employed.

Advantages of blending a styrene-acrylic and an acrylic binding agent are realized, as each type of binding agent imparts different beneficial properties. Styrene-acrylic binding agents are stiffer, harder and provide better abrasion resistance, while acrylic polymers are softer, more elastic and provide elasticity and pliability to the nonwoven. More importantly, the considerably higher glass transition temperature (Tg) of the styrene-acrylics provides the required stability during use at higher temperature under T3 and T4 conditions. Blending both types of binding agent and varying the ratio of both components provides a route to optimizing the performance of the nonwoven and the final harnessing tape product.

The preferred weight of the nonwoven is between 10 and 140 g/m², since mechanical properties like tensile strength, elongation at tear, stiffness and flexibility in this range allow construction of an automotive harnessing tape with the desired performance.

The wet-laid nonwoven used as a backing material in the adhesive tape of the present invention can be manufactured according to the method described by B.P. Thomas in 1993 (Thomas, B.P., A Review of Wet-Laid Nonwovens: Manufacturing and Markets, INDA-TECH 93, 247-264 (1993)). The fundamental process for manufacturing wet-laid nonwovens, which can be used to produce the wet-laid nonwoven of the present invention, can be roughly divided into three separate steps.

Firstly, fibers to be used for the nonwoven are dispersed in water in a total concentration of 0,05 to 0,5% by weight. If a mix of cellulose fibers and synthetic fibers is used, good dispersion and homogeneity of the water dispersion has to be achieved. A number of chemical additives have been developed to aid dispersion and maintain it through the storage system. In addition, foam generation has to be minimized to avoid thin patches or holes in the web.

In the second step, the dispersed fibers are deposited on a screen or cylinder, and by stripping the water, a layer of fibers is created. If synthetic fibers are part of the formulation, all natural cohesive tendencies through hydrogen bonding are lost.

In the third step, bonding is performed. The nonwoven of the present invention is chemically bonded. In addition to chemical bonding, mechanical bonding and/or thermal bonding can be used in the process for manufacturing the nonwoven of the present invention

Chemical bonding uses binders to provide the required cohesion and strength to the nonwoven as described, for example, in EP 0 995 783 A and US 5 631 073. It can be applied by deposition, spraying, saturation, coating or sizing during or after web formation. Optionally, binders with crosslinking capability can be used.

Mechanical bonding can be done either through natural entanglement during web formation or through a forced entanglement such as hydroentanglement. Both methods have been described in US 5 631 073 in detail. In one embodiment of the adhesive tape of the present invention, the nonwoven is further consolidated by hydroentanglement.

Hydroentanglement is achieved by placing the web between mesh screens and subsequently passing high pressure water jets through the screen and the web. Forced entanglement such as hydroentanglement provides higher levels of cohesion; however, it introduces patterns to the surface of the product. More importantly, this process weakens the nonwoven in longitudinal and transversal directions. The use of water or air jets to bond nonwovens for harnessing applications has been described in EP 1 123 958 A.

A third type of bonding which may be used in the process for manufacturing the nonwoven of the present invention is known as thermal bonding. Here, typically at least two fibers of different melting points are submitted to air drying, infrared bonding, hot calendering and embossing to partially melt the fibers with lower melting point. For example, the binder fibers with a core-sheath construction can be used. These fibers consist of a meltable sheath and a core, which does not melt under the chosen processing conditions. As described in US 5 631 073, combinations of different bonding techniques can be used, like hot pattern embossing of a hydroentangled nonwoven.

Essential characteristics of a polymer which can be employed for binder fibers are efficient melt flow, good adhesion to the carrier fiber, a lower melting point than the carrier fiber and desired stiffness or elasticity. Single-component and bi-component binder fibers are most widely used in thermal bonding of nonwovens. Single-component fibers are the least sophisticated and most economical ones. The major disadvantage of single-component fibers is the narrow temperature range useful for bonding. If the temperature is too low, there is inadequate bond strength. If it is too high, the web will melt excessively and flexibility and plyability will suffer. Single-component fibers suitable for papermaking and wet-laid nonwovens include polyvinyl alcohol, e.g. Kuralon^{®}, and ethylene-vinyl alcohol fibers. Both types are commercially available from Kuraray Europe GmbH, Building F821, Hoechst Industrial Park, 65926 Frankfurt am Main, Germany.

Bi-component fibers offer a much wider acceptable temperature range for bonding. The high melting portion of the fiber maintains the integrity of the web, while the low melting point portion melts and bonds with other fibers at the fiber crossover points. Most common configuration is the sheath-core type. The following combinations are widely used:
- Polyester core (melt point: 250°C) with copolyester sheath (melting points of 110°C to 220 °C)
- Polyester core (melt point: 250°C) with polyethylene sheath (melting point: 130 °C)
- Polypropylene core (melting point: 175°C) with polyethylene sheath (melting point: 130 °C)
- Polyester core (melting point: 250 °C) with ethylene-vinyl alcohol sheath (melting point: 100 °C)

Fiber Innovation Technology, 398 Innovation Drive, Johnson City, TN 37604, USA, supplies a range of suitable products.

Beyond the choice of fibers, forming and bonding technology, other nonfibrous fillers and nonbonding additives can be added. These additives introduce features like color, hydrophobicity, release (i.e. reduced adhesion at the backside of the backing material) and flame retardancy.

Colors for nonwovens can be divided into dyes and pigments. Dyes have substantivity for fibers, meaning they are attracted from their application media by the fibrous substrate. Pigments are applied from a latex medium. Both dyes and pigments can be applied at various stages of the nonwoven process, starting from the polymer or pulp of fibers prior to web formation. In certain polymers such as polyester, dyes and pigments can be added as a concentrate to the polymer immediately prior to extrusion. This process is referred to as producer coloration or melt dyeing. Conventional dyeing is a wet process and is time, energy and cost-intensive. Wherever possible, coloring of the web is combined with the wet processes necessary for the bonding. Preferably, the dye is added to the dispersion containing the bonding agent. The binder adheres to the surface of the fibers and imparts the excellent non-fading properties which pigments are noted for. Dyeing can also be carried out at a later stage. The nonwoven fabric is then treated like a woven or knitted fabric and dyed in a traditional way.

For harnessing tapes, black color is mandatory, so well-known black pigments like carbon black (available as color black or Printex^{®} from Degussa) and ferric oxide pigments are added to the binder to provide the appropriate color. Alternatively, black colored fibers can be employed in the manufacture of the textile.

Flame retardancy of the tape end-product can be greatly enhanced by addition of suitable compounds. Boylan and Matelan (Nonwoven Binders Innovative Solutions: Providing Aqueous Barrier and Flame Retardant Properties for Nonwovens, J. R. Boylan, D. A. Matelan, Air Products Polymers, L.P. 7201 Hamilton Boulevard, Allentown, PA 18195-1501, Pub. No. 151-03-029-GLB, 2003) describe the effects of combining halogenated polymers like ethylene-vinyl chloride copolymers and inorganic or phosphorous flame retardants. Airflex^{®} 4530 and hydrated compounds like alumina trihydrate or magnesium hydroxide can be blended and applied to the nonwoven. DIOFAN^{®} A 585 from Solvay S.A. is an anionic aqueous dispersion of vinylidene chloride/butyl acrylate/methyl actylate terpolymer intended to be used as flame retardant binder for textiles and nonwovens. US 6 344514 discloses a formulated binder consisting of styrene-butadiene latices and diammonium phosphate. Flame retardancy of Vycar^{®} 590x4 of Noveon (available in Europe from VELOX GmbH, D - 20457 Hamburg), which is a plasticized vinyl chloride copolymer emulsion, is significantly enhanced when the latex is compounded with 2 to 5 parts Antimony oxide per 100 parts latex solids. Preferably, retardants with different chemical compositions are combined to act in a synergistic way. All of the above mentioned substances and combinations thereof can be used to impart the desired level of flame retardancy to the tape end-product.

Harness tapes are supplied to the end-user as self-wound rolls, i.e. the tape is wound directly onto itself, with no interleaving or liner between the backing and the adhesive and the next layer of tape. Therefore consistent unwinding of the roll is of major importance. The force required to unwind tape from the roll is governed by the adhesion of the adhesive layer to the underlying external surface to the nonwoven backing. This adhesion can be controlled by lowering the surface energy of the nonwoven by applying so called release agents, low adhesion backsize (LAB) materials or repellents. Suitable compounds include fluorocarbons, silicones or hydrocarbon chemicals applied to the nonwoven by sizing, spraying, Foulard or other suitable processes. Foulard application employs aqueous dispersions of repellents in concentrations between 0.1 vol% and 10 vol%. By adjusting the amount of the release agent, the adhesion to the backside and thus the unwinding force can be controlled and adjusted to the desired level. Suitable repellents include Zonyl^{®} available from DuPont, Oleophobol^{®} available from Ciba SC, Nuva^{®} available from Clariant and a polyvinylstearate-carbamate copolymer Icafinish CS16^{®} from ICAP-Sira.

### Adhesive

Pressure-sensitive adhesives of various chemical compositions can be employed in the present invention. Acrylates and natural or synthetic rubber compositions are especially suitable, either in the form of solvent-based, water-based or hot-melt adhesives. Appropriate pressure-sensitive adhesives are described in D. Satas: Handbook of Pressure Sensitive Adhesive Technology 2nd ed. (Van Nostrand Reinhold, New York, 1989) and are available from a range of well known suppliers like National Starch & Chemical (Duro-Tak^{®}), Rohm & Haas, Lucite, Ashland Chemical, Cytec and ICAP-Sira. Important suppliers of hot melt adhesives are BASF, Collano, H.B. Fuller or Novamelt. Hot melt adhesives can require crosslinking to withstand higher temperatures. Particularly suitable is a range of UV-curable acrylic hot melt adhesives offered by Collano AG under the brand name Collano UV N1^{®}.

To optimize its properties, the adhesive may be blended with one or more additives such as tackifiers, plasticizers, fillers, pigments, UV absorbers, light stabilizers, aging inhibitors, crosslinking agents, crosslinking promoters or elastomers.

Suitable elastomers for blending include EPDM (ethylene propylene diene monomer) or EPM (ethylene propylene monomer) rubber, polyisobutylene, butyl rubber, ethylene-vinyl acetate, hydrogenated block copolymers of dienes, including and not limited to styrene-isoprene-styrene (SIS), styrene-ethylene-butadiene (SEB), styrene-ethylene-butadiene-styrene (SEBS), styrene-ethylene-butadiene-styrene/styrene-ethylene-butadiene (SEBS/SEB), styrene-butadiene-styrene (SBS), styrene-isoprene-butadiene-styrene (SIBS), and acrylate copolymers such as ACM (ethyl butyl acrylate copolymer).

Suitable tackifiers include hydrocarbon resins (e.g. of unsaturated C5 or C7 monomers), terpene-phenol resins, terpene resins from raw materials such as pinene, aromatic resins such as coumarone-indene resins, or resins of styrene or α-methyl styrene, such as rosin and its derivatives such as disproportionated, dimerized or esterified resins, tall oil and its derivatives and also others, as listed in Ullmann's Encyclopedia of Industrial Chemistry, 5th Edition, VCH, Weinheim 1997, Weinheim. Particularly suitable are aging-resistant fully saturated resins without olefinic double bonds.

Examples of suitable fillers and pigments are carbon black, titanium dioxide, calcium carbonate, zinc carbonate, zinc oxide, silicates and silica.

Suitable UV absorbers, light stabilizers and aging inhibitors are well known in the art. Examples include antioxidant Vulkanox^{®} BKF (2,2'-methylene-bis-(4-methyl-6-t-butylphenol) and antioxidant Irganox^{®} 1010 (Pentaerythritol tetrakis(3-(3,5-di-tert-butyl-4-hydroxyphenyl)propionate)) which can be added by 1% by weight relative to the dry adhesive to improve stability of the adhesive.

Examples of suitable plasticizers include aliphatic, cycloaliphatic and aromatic mineral oils, diesters or polyesters of phthalic acid, trimellitic acid or adipic acid, liquid rubbers (e.g., nitrile rubbers or polyisoprene rubbers), liquid polymers of butene and/or isobutene, acrylates, polyvinyl ethers, liquid resins and soft resins based on the raw materials for tackifier resins, lanoline and other waxes. Aging-stable plasticizers without an olefinic double bond are particularly suitable.

Crosslinking can be achieved by chemical reaction, EB- or UV-curing or addition of sulphur curatives or organometallic coupling agents based on polyvalent metal ions like aluminum, zirconium and titanium. The Tyzor^{®} range by DuPont is widely used. Examples of further crosslinking agents include phenolic resins (which may be halogenated), melamine and formaldehyde resins. Suitable crosslinking promoters include maleimides, allyl esters such as triallyl cyanurate, and polyfunctional esters of acrylic and methacrylic acid. Use of crosslinked adhesives is especially preferred for high temperature applications of the tape, especially in engine compartments.

Adhesive coating weights used in the present invention are preferably in the range of 20 to 200 g/m², Within this range, desired pressure sensitive adhesion properties can be obtained with an acrylic copolymer, or with a synthetic or a natural rubber adhesive well known in the industry. More preferably, the adhesive coating weights are in the range of 30 to 150 g/m².

Adhesive tapes are manufactured by coating backing materials with pressure sensitive adhesives. The main processes used are coating of hot melt or liquid adhesives, either by transfer or direct coating. Transfer coating uses an intermediate carrier like silicone paper or film or a siliconized belt to dry or partially dry the adhesive layer before laminating it to the backing. Direct coating transfers dissolved or molten adhesive on the carrier, with subsequent cooling or evaporation of solvent. Commonly, direct coating is preferred for economical reasons, since there is no need for intermediate process liners.

A wide range of coating techniques to apply adhesives to filmic or textile backings is well known in the industry. The following techniques are most often used:
gap coating i.e. knife over roll, roll over roll, floating knife, knife over blanket; air knife coating; curtain coating; rotary screen coating; reverse roll coating; gravure coating; metering rod (Meyer bar) coating; slot die (Slot, Extrusion) coating and hot melt coating. All of these coating methods can be applied to manufacture the aforementioned tape of the present invention. Most preferably, gap coating is used. This gives best results concerning anchorage of the adhesive into the backing while at the same time avoiding striking through during the coating step.

### Examples

The following established standards were used to determine physical properties of the adhesive tape.
Measurement of breaking strength: EN 1940 Self adhesive tapes
Measurement of elongation at break: EN 1941 Self adhesive tapes

Abrasion resistance: ISO 6722 (2002) Chapter "scrape abrasion" with 6mm diameter mandrel, identical to chapter 7.11 of "Harness Tape Performance Specification" ES-XU5T-1A303-AA of Ford Motor Co.

Adhesion to backside/unwind force, Adhesion data: AFERA 4001, corresponding to DIN EN 1939 Self adhesive tapes: Determination of peel adhesion properties
Sound dampening performance: PSA test method 9645871099D "Protection faisceau rubans"
Hand tearability: Chapter 7.3.6 of the established standard "Adhesive tapes for wiring harnesses in motor vehicles" LV312 of Audi AG, BMW AG, DaimlerChrysler AG, Porsche AG and Volkswagen AG
According to LV312, the tear properties are assessed by a panel of individuals who are familiar with adhesive tapes, especially for automotive harnessing applications. The group evaluates these tapes for conformability, ease of tear, tear initiation, smoothness of the created edge, deformation of the tape related to stress induced, so called curling, and the force required to tear. Each of these characteristics is rated and the overall performance is rated as "good manual tear-off property", "limited manual tear-off property" or "no manual tear-off property"
Conformability of the nonwoven was assessed by a Scapa internal method. A rectangular test specimen of 5 cm length and 2 cm width was suspended on the edge of a plate, with 3 cm protruding. The angle of the nonwoven's deflection from the horizontal is measured.

### Example 1

A wet-laid nonwoven material consisting of 28% by weight polyester fibers, 47% by weight wood pulp fibers and 25% by weight binder was coated on a conventional knife over roll coating equipment with 40g/m² Gelva GMS-2659^{®}, a solvent based acrylic copolymer adhesive of Cytec Surface Specialties SA. After drying, the resulting roll was converted using conventional equipment to receive rolls of 1,9 cm width and 20 m length.

### Example 2

A wet-laid nonwoven made of 45% by weight polyester, 20% by weight wood pulp fibers and 35% by weight binder was coated on a state of the art hot melt extruder with 60 g/m² of synthetic rubber hot melt adhesive. The obtained roll was converted using conventional equipment to receive rolls of 1,9 cm width and 20 m length.

### Example 3

A wet-laid nonwoven material consisting of 34% by weight polyester fibers, 17% by weight wood pulp fibers and 50% by weight binder was coated on a conventional knife over roll coating equipment with 30 g/m² Gelva GMS-6144^{®}, a water-based acrylic copolymer adhesive of Cytec Surface Specialties SA. After drying, the resulting roll was converted using conventional equipment to receive rolls of 1,9 cm width and 20 m length.

**Table 2**

| | ***Comparative Example 1*** (tesa 51608) | ***Example 1*** | ***Example 2*** | ***Example 3*** |
|---|---|---|---|---|
| **Type of Fabric** | Maliwatt | Wetlaid | Wetlaid | Wetlaid |
| **Fibers wt%** | 100% PES | 28% PES 47% Wood Pulp | 45% PES 20% Wood Pulp | 34% PES 17% Wood Pulp |
| **Binder wt%** | | 25% Binder | 35% Binder | 50% Binder |
| **Release treatment** | ? | Nuva FBN [1 vol %]* | Nuva FBN [1 vol %] | Nuva FBN [1 vol %] |

| | | | | |
|---|---|---|---|---|
| * commercially available from Clariant (France), 69530 Brignais, France | | | | |

**Table 3**

| | ***Test Method*** | ***Comparative Example 1*** | ***Example 1*** | ***Example 2*** | ***Example 3*** |
|---|---|---|---|---|---|
| **Backing weight [g/m²]** | | 85 | 68.7 | 67.1 | 83.9 |
| **Backing thickness [µm]** | AFERA 5006 | 275 | 260 | 250 | 227 |
| **Color** | | Black | Black | Black | Noir |
| **Tensile strength MD [N/cm]** | NF EN 1940 | 34.6 | 27.4 | 39.1 | 24.8 |
| **Elongation MD [%]** | NF EN 1941 | 20 | 19.9 | 17.8 | 19.4 |
| **Conformability 1 - very stiff 5 - Good conformability [Index 1-5]** | Subjective | 5 | 2 | 2 | 4 |
| **Conformability Deflection Angle [Degree]** | Scapa internal | | 37 | 42 | 56 |
| **Curling 1 - bad behavior 5 - good behavior [Index 1-5]** | Subjective | 4 | 5 | 5 | 5 |

**Table 4: After aging 10 days at 150 °C**

| | ***Test Method*** | ***Comparative Example 1*** | ***Example 1*** | ***Example 2*** | ***Example 3*** |
|---|---|---|---|---|---|
| **Tensile strength MD** | NF EN 1940 | | 18.5 | 26.7 | 22.8 |
| **Elongation MD** | NF EN 1941 | | 9.5 | 15.3 | 17.8 |
| **Tensile strength CD [N/cm]** | NF EN 1940 | | 19.4 | 25.4 | 21.9 |
| **Elongation CD [%]** | NF EN 1941 | | 7.2 | 16.9 | 16.7 |
| **Color** | | | No change | No change | No change |

**Table 5: After aging 10 days at 175°C**

| | ***Test Method*** | ***Comparative Example 1*** | ***Example 1*** | ***Example 2*** | ***Example 3*** |
|---|---|---|---|---|---|
| **Tensile strength MD [N/cm]** | NF EN 1940 | | 14 | 21.9 | 20.3 |
| **Elongation MD [%]** | NF EN 1941 | | 9.5 | 11.6 | 15.8 |
| **Tensile strength CD [N/cm]** | NF EN 1940 | | 12.9 | 20.4 | 21.1 |
| **Elongation CD [%]** | NF EN 1941 | | 7.5 | 13 | 12.8 |
| **Color** | | | No change | No change | No change |

**Table 6**

| | ***Test Method*** | ***Comparative Example 1*** | ***Example 1*** | ***Example 2*** | ***Example 3*** |
|---|---|---|---|---|---|
| **Adhesive coat weight [g/m²]** | | | 40 | 60 | 30 |
| **Abrasion resistance Renault/ISO [Cycles]** | ISO 6722 | 62 | 8 | 51 | 109 |
| **Sound dampening [dB]** | PSA 9645871099D | 8.3 | 9.1 | 10 | |
| **Adhesion to backside/unwind force [N/cm]** | AFERA 4001 | 5.1 | 2.6 | 1.74 | 1.09 |
| **Tearability CD 1 - good manual tear-off property 2 - limited manual tear-off property 3 - no manual tear-off property** | LV 312 | 2 | 1 | 1 | 1 |
| **Cohesion of backing 1 - fabric splitting 5 - no fabric splitting [Index 1-5]** | Subjective | 4 | 5 | 5 | 4 |
| **Resistance to automotive fluids** | LV 312 | | | | |
| **Motor oil** | | | Flagging | OK | OK |
| **Brake fluid** | | | Flagging | OK | OK |
| **Gasoil** | | | Flagging | OK | OK |

As shown in Tables 2 to 6, the adhesive tapes of Examples 1 to 3 show a similar performance to (Maliwat-product). Specifically, it was found that the adhesive tape of the present invention has excellent behavior in the following areas: tearability, curling, flexibility, abrasion resistance, temperature stability, sound dampening and resistance to automotive fluids. Furthermore, the adhesive tapes of the present invention can be produced very cost-efficiently. Hence, the overall balance of performance and cost for the inventive adhesive tapes is better than that for the tapes of the Comparative Example 1 (tesa 51608).

## Claims

1. An adhesive tape comprising:
(a) a wet-laid nonwoven backing material comprising synthetic fibers and cellulose fibers, wherein the ratio of synthetic to cellulose fibers is 4:1 to 1:4, and the nonwoven backing material is chemically bonded using a binder; and
(b) an adhesive.

2. The adhesive tape according to claim 1, **characterized in that** the synthetic fibers are polyester fibers.

3. The adhesive tape according to claim 1 or 2, **characterized in that** the cellulose fibers are wood pulp fibers.

4. The adhesive tape according to any of the preceding claims, **characterized in that** the weight ratio of fibers to the binders is 80:20 to 20:80.

5. The adhesive tape according to any of the preceding claims, **characterized in that** the fiber length of the cellulose fibers and synthetic fibers is in the range of 1 to 20 mm.

6. The adhesive tape according to any of the preceding claims, **characterized in that** the chemical binder comprises one or more binding agents selected from acrylic homopolymers or copolymers.

7. The adhesive tape according to claim 6, **characterized in that** the chemical binder is a mixture of an acrylic polymer and a styrene-acrylic copolymer.

8. The adhesive tape according to claim 7, **characterized in that** the ratio of the acrylic polymer to the styrene-acrylic copolymer is 4:1 to 1:4.

9. The adhesive tape according to any of the preceding claims, **characterized in that** the wet-laid nonwoven is consolidated by hydroentanglement.

10. The adhesive tape according to any of the preceding claims, **characterized in that** the adhesive is selected from acrylates and natural or synthetic rubber compositions.

11. A process for manufacturing an adhesive tape as defined in any of the preceding claims comprising the step of coating the wet-laid nonwoven with the adhesive.

12. Use of the adhesive tape according to any of claims 1 to 10 as a wire harnessing tape in automotive industry.

## Patentansprüche

1. Klebeband, umfassend:
(a) ein Nassvliesgrundmaterial, umfassend synthetische Fasern und Cellulosefasern, worin das Verhältnis der synthetischen zu den Cellulosefasern 4:1 bis 1:4 beträgt und das Vliesträgermaterial unter Verwendung eines Bindemittels chemisch gebunden ist; und
(b) ein Klebemittel.

2. Klebeband gemäß Anspruch 1, **dadurch gekennzeichnet, dass** die synthetischen Fasern Polyesterfasern sind.

3. Klebeband gemäß Anspruch 1 oder 2, **dadurch gekennzeichnet, dass** die Cellulosefasern Holzzellstofffasern sind.

4. Klebeband gemäß mindestens einem der vorhergehenden Ansprüche, **dadurch gekennzeichnet, dass** das Gewichtsverhältnis der Fasern zu den Bindemitteln 80:20 bis 20:80 beträgt.

5. Klebeband gemäß mindestens einem der vorhergehenden Ansprüche, **dadurch gekennzeichnet, dass** die Faserlänge der Cellulosefasern und der synthetischen Fasern im Bereich von 1 bis 20 mm liegt.

6. Klebeband gemäß mindestens einem der vorhergehenden Ansprüche, **dadurch gekennzeichnet, dass** das chemische Bindemittel ein oder mehrere bindende Mittel umfasst, die aus Acryl-Homopolymeren oder -Copolymeren ausgewählt werden.

7. Klebeband gemäß Anspruch 6, **dadurch gekennzeichnet, dass** das chemische Bindemittel eine Mischung aus einem Acrylpolymer und einem Styrol-Acryl-Copolymer ist.

8. Klebeband gemäß Anspruch 7, **dadurch gekennzeichnet, dass** das Verhältnis des Acrylpolymers zu dem Styrol-Acryl-Copolymer 4:1 bis 1:4 beträgt.

9. Klebeband gemäß mindestens einem der vorhergehenden Ansprüche, **dadurch gekennzeichnet, dass** das Nassvlies durch Wasserstrahlverfestigung verfestigt ist.

10. Klebeband gemäß mindestens einem der vorhergehenden Ansprüche, **dadurch gekennzeichnet, dass** das Klebemittel aus Acrylaten und natürlichen oder synthetischen Kautschukzusammensetzungen ausgewählt wird.

11. Verfahren zur Herstellung eines Klebebands, das in einem der vorhergehenden Ansprüche definiert wird, umfassend den Schritt der Beschichtung des Nassvlieses mit dem Klebemittel.

12. Verwendung des Klebebands gemäß mindestens einem der Ansprüche 1 bis 10 als Kabelbaumband in der Automobilindustrie.

## Revendications

1. Bande adhésive comprenant :
(a) une matière absorbante non tissée par voie humide comprenant des fibres synthétiques et des fibres de cellulose, où le rapport de fibres synthétiques aux fibres de cellulose est 4 :1 à 1 :4, et la matière absorbante non tissée est collée chimiquement par l'utilisation d'un liant ; et
(b) un adhésif.

2. Bande adhésive selon la revendication 1, **caractérisée en ce que** les fibres synthétiques sont des fibres de polyester.

3. Bande adhésive selon la revendication 1 ou 2, **caractérisée en ce que** les fibres de cellulose sont des fibres de pâte de bois.

4. Bande adhésive selon l'une des revendications précédentes, **caractérisée en ce que** le rapport pondéral de fibres aux liants est 80 :20 à 20 :80.

5. Bande adhésive selon l'une des revendications précédentes, **caractérisée en ce que** la longueur de la fibre des fibres de cellulose et des fibres synthétiques est dans la gamme de 1 à 20 mm.

6. Bande adhésive selon l'une des revendications précédentes, **caractérisée en ce que** le liant chimique comprend un ou plusieurs agents liants sélectionnés parmi des copolymères ou homopolymères acryliques.

7. Bande adhésive selon la revendication 6, **caractérisée en ce que** le liant chimique est un mélange d'un polymère acrylique et d'un copolymère styrène acrylique.

8. Bande adhésive selon la revendication 7, **caractérisée en ce que** le rapport du polymère acrylique au copolymère styrène-acrylique est 4 :1 à 1 :4.

9. Bande adhésive selon l'une des revendications précédentes, **caractérisée en ce que** le non tissé par voir humide est consolidé par hydro-enchevêtrement.

10. Bande adhésive selon l'une des revendications précédentes, **caractérisée en ce que** l'adhésif est sélectionné parmi des acrylates et des compositions de caoutchouc synthétique ou naturel.

11. Processus pour fabriquer une bande adhésive comme défini dans l'une des revendications précédentes, comprenant l'étape qui consiste à revêtir le non tissé par voie humide avec l'adhésif.

12. Utilisation de la bande adhésive selon l'une des revendications 1 à 10 comme bande de faisceaux électriques dans l'industrie automobile.
